(19) Europäisches Patentamt
European Patent Office
Office européen des brevets

(11) **EP 2 762 736 B1**

(12) **EUROPEAN PATENT SPECIFICATION**

(45) Date of publication and mention
of the grant of the patent:
**02.11.2016  Bulletin 2016/44**

(21) Application number: **12836301.7**

(22) Date of filing: **05.09.2012**

(51) Int Cl.:
*F16C 33/12* (2006.01)    *F16C 9/00* (2006.01)
*F16C 33/10* (2006.01)    *F16C 33/20* (2006.01)
*C09D 179/08* (2006.01)    *C08K 3/22* (2006.01)
*C08K 3/26* (2006.01)    *C08K 3/30* (2006.01)
*C08K 3/38* (2006.01)    *C08G 73/14* (2006.01)

(86) International application number:
**PCT/JP2012/072557**

(87) International publication number:
**WO 2013/047120 (04.04.2013 Gazette 2013/14)**

(54) **SLIDING BEARING**

GLEITLAGER

PALIER LISSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2011  JP 2011214077**

(43) Date of publication of application:
**06.08.2014  Bulletin 2014/32**

(73) Proprietor: **Daido Metal Company Ltd.
Nagoya-shi, Aichi 460-0008 (JP)**

(72) Inventors:
• **KOBAYAKAWA Hiroki**
**Inuyama-shi**
**Aichi 484-0061 (JP)**
• **KAWAKAMI Naohisa**
**Inuyama-shi**
**Aichi 484-0061 (JP)**

• **INAMI Shigeru**
**Inuyama-shi**
**Aichi 484-0061 (JP)**
• **MCALEESE Colin**
**Inuyama-shi**
**Aichi 484-0086 (JP)**

(74) Representative: **Beckmann, Claus
Kraus & Weisert
Patentanwälte PartGmbB
Thomas-Wimmer-Ring 15
80539 München (DE)**

(56) References cited:
JP-A- 2001 139 699     JP-A- 2007 246 836
JP-A- 2007 270 894     JP-A- 2007 270 895
JP-A- 2008 240 785     US-A1- 2006 245 675
US-A1- 2008 214 415

**Description**

TECHNICAL FIELD

The present invention relates to a sliding bearing that is provided with a resin coating layer additionally on a bearing alloy layer, and is suitable for transportation equipment, particularly for an automobile engine.

BACKGROUND ART

A sliding bearing excellent in sliding characteristics such as wear resistance and anti-seizure property is necessary for an automobile engine with high circumferential speed/high specific load. As one of the bearing technology excellent in sliding characteristics like this, a sliding bearing thinly provided with a resin coating layer on the surface of a bearing alloy layer can be cited. The resin coating layer does not generate an adhesion phenomenon like a metallic material, and therefore, shows remarkably favorable anti-seizure property as compared with metallic bearing alloy layers or overlay layers. In addition, also with regard to wear resistance and fatigue resistance, the resin coating layer shows performance equivalent to or higher than those of metallic materials.

While several methods can be cited as a method for improving the anti-seizure property of a resin coating layer, what especially has an influence is the presence of a solid lubricant. For example, Patent Literature 1 points out that as the amount of a solid lubricating is larger, and crystal orientation is more uniform, a greater effect is obtained in anti-seizure property. That is, Patent Literature 1 has the statement to the effect that "as the above-described mechanism, the solid lubricant causes sliding on a certain crystal plane when a load is applied during sliding between a shaft and the bearing, and deforms the entire resin coating layer, and thereby improves anti-seizure property. Therefore, as the amount of the solid lubricant that exhibits the effect is larger, and the slide surface is aligned more in parallel with the sliding direction, the anti-seizure property improving effect is large."

CITATION LIST

PATENT LITERATURE

Patent Literature 1: JP-A-2008-95725

SUMMARY OF INVENTION

TECHNICAL PROBLEM

Incidentally, in the automobile engines of recent years, the number of engines that frequently repeat starting and stopping (for example, an idling stop function) with the objective of enhancing fuel economy in addition to having high circumferential speed/high specific load tends to increase. The sliding bearings with the resin coating layers containing the solid lubricants, which have exhibited high performance as described above in engines for automobiles with high circumferential spLed/high specific load, tend to be seized early, since the anti-seizure property of the resin coating layers is drastically deteriorated in the engine environments as above. This can be considered as follows. While the resin coating layer keeps anti-seizure property by deformation by slide on the crystal planes of the solid lubricant in the sliding direction, a load is always exerted on the bearing by the tare weight of the shaft and the belt tension in the stopping state of the engine that repeats starting and stopping, and since supply of oil is also stopped, a state in which an oil film is not generated between the sliding surfaces of the shaft and the bearing is brought about. It is conceivable that since due to the above, a boundary lubrication state is brought about at the time of starting the engine, and the friction coefficient becomes high, excessive deformation (shearing force) arises in the resin coating layer, with this as the origin, delamination of the resin coating layer, direct metal contact with the substrate and adhesion are sequentially occur, and a seizure phenomenon is finally caused. That is, since a load to such an extent that cannot be absorbed by deformation of the solid lubricant is considered to be exerted, a serious problem of early seizure occurs, and the above sliding bearings with the resin coating are in the situation in which the sliding bearings can be hardly adopted positively in the engines that frequently repeat starting and stopping.

The present invention is made in the light of the above-described circumstances, and an object of the present invention is to provide a sliding bearing provided with a resin coating layer, and showing excellent anti-seizure property not only in an engine with high circumferential speed/high specific load, but also in an engine that frequently repeats starting and stopping.

SOLUTION TO PROBLEM

In order to attain the above-described object, the invention according to claim 1 provides a sliding bearing in which a resin coating layer having a sliding surface is provided on a surface of a bearing alloy layer layered on a back metal layer, characterized in that the resin coating layer is formed as a layer having a thickness of 2 to 10 $\mu$m, in which 20 to 50 vol% of a plate solid lubricant, and 5 to 30 vol% of adjustment particles with an average particle size of 0.7 to 1.6 $\mu$m and a Vickers hardness of 100 to 300 are included in a resin binder of which a main component is PAI (polyamide imide resin), and the plate solid lubricant is disposed in a state where an orientation intensity ratio of a (0, 0, L) plane of the plate solid lubricant to the sliding surface is not less than 75% to 85% or less. The amount of the plate solid lubricant is the amount when the amount of the resin coating layer is set as 100 vol%. The same also applies to the amount of the adjustment particles.

In the invention according to claim 2, the sliding bearing according to claim 1 is characterized in that the resin binder includes 30 mass% or less of PA (polyamide resin) and EP (epoxy resin) in total, and the adjustment particles are formed from $CaCO_3$ (calcium carbonate). Specifically, when both PA and EP are included, 30 mass% or less of PA and EP in total is included with the total of PA, EP and PAI set as 100 mass%. When one of PA and EP is included, 30 mass% or less of the one is included with the total of the one and PAI set as 100 mass%.

In the invention according to claim 3, the sliding bearing according to claim 1 or claim 2 is characterized in that the adjustment particles are distributed so that that a distance between gravity centers of the adjustment particles in a film thickness section of the resin coating layer satisfies 3 $\mu$m $\leq \alpha$- 1$\sigma$, and $\alpha$ + 1$\sigma \leq$ 15 $\mu$m, where $\alpha$ and $\sigma$ are an average value and a standard deviation of the distances between the gravity centers of the particles, respectively. In the present invention, the film thickness section is parallel with the sliding direction, and the distance between the gravity centers refers to the distance in the sliding direction between the particles.

ADVANTAGEOUS EFFECTS OF INVENTION

As described above, it is conceivable that since in the stopping state of the engine that repeats starting and stopping, a load is always exerted on the bearing by the tare weight of a shaft and belt tension, an indentation (recess) is easily formed on the resin coating layer by the shaft, and as the indentation is larger, the contact area of the shaft and the resin coating layer becomes larger, as a result of which, the friction coefficient at the time of starting after stopping becomes large so that the shearing force exerted on the resin coating layer also becomes large, and the shearing force breaks the resin coating layer to cause delamination, whereby seizure arises. Meanwhile, in the invention according to claim 1, PAI is used as the resin binder of the resin coating layer. Therefore, the resin coating layer hardly deteriorates under high temperatures as in the engine environment, and hardly causes change of the shape, and therefore, clearance change between the shaft and the bearing is small. In addition, by adding the plate solid lubricant into the resin binder, the sliding characteristics of the resin coating layer can be improved. As the plate solid lubricant, one kind or more may be selected from molybdenum disulfide, tungsten disulfide, boron nitride and graphite. If the amount of the plate solid lubricant is less than 20 vol%, the sliding characteristics of the resin layer are worsened. If the amount of the plate solid lubricant is larger than 50 vol%, the coating film strength reduces, and the resin layer easily delaminates. The amount of 25 to 45 vol% is desirable.

Furthermore, the plate solid lubricant is disposed in the state in which the orientation intensity ratio of the (0, 0, L) plane of the plate solid lubricant included in the resin coating layer is from 75% to 85% inclusive, whereby the sliding characteristics of the resin coating layer can be improved. Here, the orientation intensity ratio (%) of the (0, 0, L) plane that expresses a slide surface of the solid lubricant is calculated by the following formula.

$$(\text{Formula}) \quad \sum I\,(0, 0, L)/\sum I\,(H, K, L) \times 100$$

(H, K, L: integer values)

If the orientation intensity ratio is less than 75%, the friction coefficient of the resin coating layer becomes high, and as a result, the anti-seizure property is worsened, and if the orientation intensity ratio is larger than 85%, crack propagation is not stopped when very small cracks are produced, large delamination arises, and anti-seizure property is deteriorated.

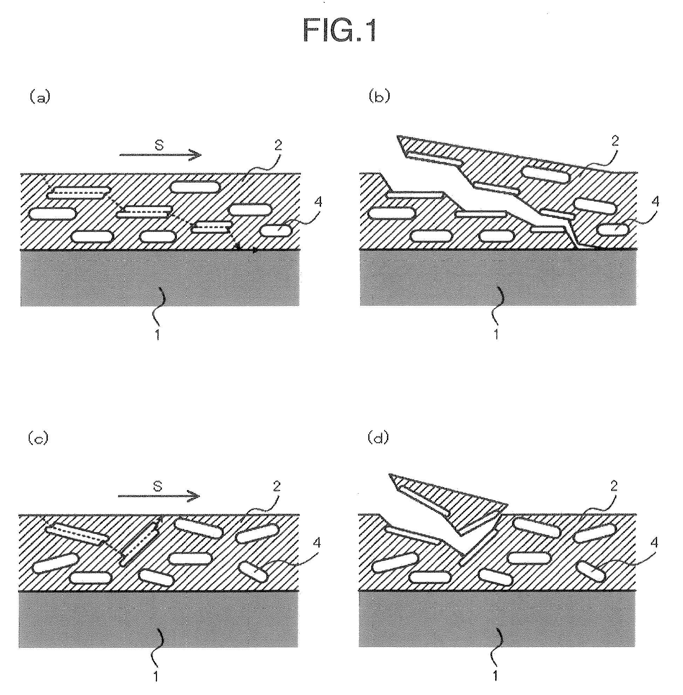

Here, the mechanism of delamination arising due to difference in orientation intensity ratio is described in more detail. When the orientation intensity ratio is so high as to exceed 85%, the ratio of the slide surface ((0, 0, L) plane) of the solid lubricant in parallel with the sliding direction is large, and therefore, as shown in Fig. 1(a), due to friction with a shaft, a crack in parallel with a sliding direction s arises as shown by the broken line along the (0, 0, L) plane that is the slide surface in the longitudinal direction of a plate solid lubricant 4 near the sliding surface. The crack propagates to cause a crack in a wide region in a resin coating layer 2 to reach a bearing alloy layer 1 from the sliding surface, as a result of which, as shown in Fig. 1(b), relatively large delamination with which a suitable oil film thickness cannot be ensured arises, whereby metal contact with the bearing alloy layer in a wide range, and adhesion sequentially occur to cause seizure. In contrast with this, when the orientation intensity ratio is 85% or less, the ratio of the plate solid lubricant 4 in which the slide surface is not in parallel with the sliding direction is properly present. Therefore, even if a crack arises as shown by the broken line along the (0, 0, L) plane that is the slide surface in the longitudinal direction of the plate solid lubricant 4 near the sliding surface due to friction with a shaft as shown in Fig. 1(c), the crack does not reach the bearing alloy layer 1, but the direction of the crack is in the state of extending to the sliding surface again, as a result of which, as shown in Fig. 1(d), only relatively small delamination occurs, and the possibility of the bearing alloy layer 1 that is a base material being exposed can be reduced. However, if the orientation intensity ratio is less than 75%, the ratio of the plate solid lubricants the slide surfaces of which are not in parallel with the sliding direction becomes large, and as described above, the friction coefficient of the resin coating layer 2 becomes high, as a result of which, anti-seizure property is worsened.

Furthermore, by addition of the adjustment particles of the present invention, the compressive strength of the resin coating layer is increased, and indentations on the resin coating layer by a shaft are prevented. In addition, the effect of damming propagating cracks is provided by the adjustment particles, and since the ratio of the plate solid lubricants in which the slide surfaces are in parallel with the sliding direction can be adjusted by mixing the plate solid lubricants and the adjustment particles, the solid lubricant orientation adjustment effect that prevents delamination is provided.

The adjustment particles have 100 to 300 HV, and are, for example, particles of $CaCO_3$, $CaF_2$, $Cu_3AsS_4$, an Sn-Sb-As compound, a Zn-Al compound or the like.

Furthermore, if the amount of the adjustment particles is less than 5 vol%, the particle amount of the adjustment particles that are present in the resin coating layer is small, the effect of damming cracks propagating along the plate solid lubricant and the solid lubricant orientation adjustment effect are lacking, and the effect of preventing indentations on the resin coating layer by a shaft cannot be obtained. Meanwhile, if the amount of the adjustment particles is larger than 30 vol%, the sliding surface becomes rough due to coagulation of the adjustment particles, and the anti-seizure property is deteriorated. The amount of the adjustment particles is preferably 10 to 25 vol%. Furthermore, if the average particle size of the adjustment particles is less than 0.7 $\mu$m, the effect of damming propagating cracks and the solid lubricant orientation adjustment effect are lacking, and the effect of preventing indentations of the resin layer by a shaft cannot be obtained. Meanwhile, if the average particle size is larger than 1.6 $\mu$m, the sliding surface becomes rough, and the anti-seizure property is deteriorated. Note that as the method for measuring the average particle size of the adjustment particles, the composition image of the resin coating layer is photographed with use of an electron microscope with a 5000-fold magnification, and from the obtained composition image, the average particle size is measured by using an ordinary image analysis method (analysis software: Image-ProPlus (Version 4.5); made by Planetron. Inc., etc.).

Furthermore, if the film thickness of the resin coating layer is less than 2 $\mu$m, even small delamination/falling off causes metal contact, and therefore, anti-seizure property is deteriorated. If the film thickness is larger than 10 $\mu$m, the thermal conductivity is worsened, the temperature of the resin coating 3 layer becomes high, and the mechanical properties are reduced. The film thickness of the resin coating layer is more preferably 3 to 8 $\mu$m.

Furthermore, as in the invention according to claim 2, the resin binder with PAI used as a main component includes 30 mass% or less of PA and EP in total, whereby extensibility of the resin binder is increased, and delamination can be restrained.

In addition, the adjustment particles are preferably formed from calcium carbonate. Calcium carbonate has the effects of

(1) being harder than the resin binder, and contributing to increase of compressive strength
(2) not damaging a shaft (the shaft has approximately 500 HV, whereas $CaCO_3$ has approximately 135 HV)
(3) having high wettability with oil and being advantageous in ensuring an oil film
(4) being excellent in sliding characteristics (calcium carbonate has the effect of forming $CaSO_4$ only in surface regions of the particles by reacting with a sulfate component in an engine oil to increase the sliding characteristics)
(5) being relatively inexpensive, and having little influence on humans. Furthermore, calcium carbonate particles that are adjustment particles are especially preferable in the aspects of bondability to the resin binder and dispersibility.

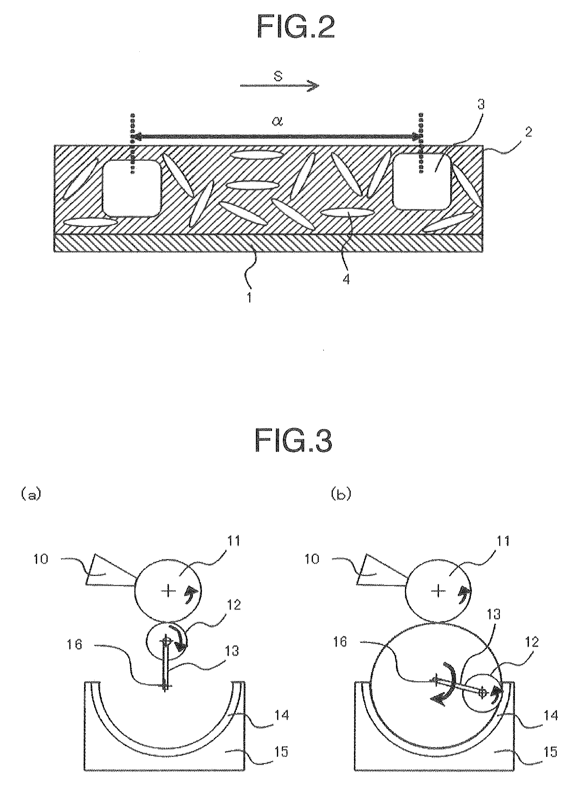

Furthermore, as in the invention according to claim 3, the adjustment particles are distributed so that the distance between the gravity centers of the adjustment particles in the film thickness section of the resin coating layer satisfies 3 $\mu$m $\leq \alpha$ 1$\sigma$, and $\alpha$ + 1$\sigma \leq$ 15 $\mu$m where $\alpha$ and $\sigma$ are respectively the average value and the standard deviation of the distance between the gravity centers of the particles, whereby the plate solid lubricants can be easily disposed in the state in which the orientation intensity ratios of the (0, 0, L) planes of the plate solid lubricants included in the resin coating layer are from 75% to 85% inclusive. That is, as described above, by mixing the plate solid lubricant and the adjustment particles together, the ratio of the plate solid lubricants in which the slide surfaces are in parallel with the sliding direction can be adjusted. More specifically, as shown in a schematic view of Fig. 2, the adjustment particles 3 such as calcium carbonate particles with the average particle size of 0.7 to 1.6 $\mu$m that are mixed into the resin coating layer 2 provided on the surface of the base material bearing alloy layer I are distributed so that 3 $\mu$m $\leq \alpha$ 1$\sigma$, and $\alpha$ + 1$\sigma \leq$15 $\mu$m are satisfied, whereby the ratio of the plate solid lubricant 4 included in the resin coating layer 2 being in a parallel state to the sliding surface can be adjusted to a predetermined value. That is, when a predetermined pressing pressure is applied at the time of production, the plate solid lubricant 4 that is present near the calcium carbonate particles (hereinafter, an example of using calcium carbonate particles as the adjustment particles will be described for facilitating the invention image) 3 in the resin coating layer 2 is not in a state parallel to the sliding surface by being obstructed by the calcium carbonate particles 3, and the plate solid lubricant 4 that is present at the position slightly far from the calcium carbonate particles 3 is easily brought into a state parallel to the sliding surface. In this manner, the calcium carbonate particles 3 are distributed so that the average value $\alpha$ of the distances between the gravity centers in the sliding direction s of the calcium carbonate particles 3 becomes 3 + 1$\sigma$ $\mu$m or more, and 15 - 1$\sigma$ $\mu$m or less, whereby the plate solid lubricant 4 can be easily disposed in the state in which the orientation intensity ratio of the (0, 0, L) plane of the plate solid lubricant 4 included in the resin coating layer 2 is from 75% to 85% inclusive. Note that as for the distance between the gravity centers of the calcium carbonate particles, the composition image of the resin coating layer is photographed with a 5000-fold magnification with use of an electron microscope, the gravity center points of the respective particles are displayed with use of an ordinary image analysis method (analysis software: Image-ProPlus (Version 4.5); made by Planetron, Inc., etc.) from the obtained composition image, the line in the direction perpendicular to the film thickness direction is drawn, the distribution of the distances between the particles are obtained by measuring the distances, and $\alpha$ (the average value of the inter-particulate distance) and $\sigma$ (standard deviation) are calculated.

Furthermore, in the present invention, as the film deposition method of the resin coating layer, film deposition is performed by a roll coat method, and any of an aluminum alloy, a copper alloy, and a tin alloy may be used for the bearing alloy layer on which the resin coating layer is provided. Furthermore, when metal plating is further applied to the surface of the bearing alloy layer, the resin coating layer according to the present invention may be deposited on the surface of the metal plating. Note that the bearing alloy layer layered on the back metal layer may be provided on the back metal layer via an intermediate layer, or may be directly provided on the back metal layer. Furthermore, as pretreatment to the bearing alloy layer for increasing an adhesive force, surface roughening treatment by shot blast, retching treatment, chemical conversion treatment, primer treatment, corona discharge treatment or the like is preferably performed. Furthermore, the scratch strength of the resin coating layer is preferably 1,000 MPa or more. The scratch strength mentioned here refers to the resistance value at the time of scratching the inside of the layer with a conical diamond indenter, and is a value obtained by dividing the frictional force by the projected area of the diamond intender that sinks into the resin coating layer. It is shown that as the scratch strength is higher, the resin coating layer delaminates with higher difficulty, and the effect of increasing the delamination prevention characteristics of the resin coating layer is found. The method is effective as the method for easily confirming the structure of the present invention.

Note that the reason why the roll coat method is adopted as the film deposition method of the resin coating layer in the present invention is as follows. For example, with the production method by spray coat shown in JP-A-2010-249313 (paragraph [0078]), the coating device is complicated in the case of the sliding bearing in a half shell shape to which the present invention is applied, and in the case of producing a thin film by spray coat, it is very difficult to control the (0, 0, L) plane orientation intensity ratio of the plate solid lubricant to be 75% to 85% inclusive. At the same time, it is very difficult to keep uniformity of the film thickness. Furthermore, the production method by impregnation into the porous metal layer shown in JP-A-2010-216639 (paragraphs 0017 and 0023), for example, is not suitable for production of a thin film. Even if the film can be formed by the method by impregnation, the (0, 0, L) plane orientation intensity ratio of the plate solid lubricant rises too much by the high pressure by rolling at this time, and it is very difficult to control the (0, 0, L) plane orientation intensity ratio of the solid lubricant to be 75% to 85% inclusive. Furthermore, with the production method that applies coating to the base material after spraying powder of calcium carbonate or the like shown in JP-A-2000-505527 (page 7, from line 15), for example, the resin coating layer can be produced on a flat plate, but spraying powder to the sliding bearing in the half shell shape takes much effort, and calcium carbonate powder cannot be distributed uniformly into the resin binder. Therefore, enhancement in the performance of preventing a shaft from sinking and the resin coating layer from delaminating cannot be obtained. Accordingly, as the film deposition method of the resin coating layer, a roll coat method is optimum.

Furthermore, the configuration of the invention cannot be obtained by only adopting roll coat as the production method, and a contrivance for the pressing specific load of the print roller to the surface to be coated is required. In addition, if the print roller roughness is high, calcium carbonate particles are easily segregated on the concave portions of the printing roller at the time of pressing, and therefore, the printing roller roughness needs to be carefully selected. That is, the pressing specific load at the time of coating is desired to be 3500 to 6000 Pa. This is because if the pressing specific load is less than 3500 Pa, the (0, 0, L) plane orientation intensity ratio tends to be less than 75%, and if the pressing specific load exceeds 6000 Pa, the (0, 0, L) plane orientation intensity ratio tends to exceed 85%. Furthermore, as the printing roller roughness, in the roughness except for winding of the roller (secondary roughness), the total sum of the maximum crest height and the maximum trough depth (Rp + Rv) in the reference length is desirably 3.0 to 7.0 μm. If the total sum is less than 3.0 μm, the roller cannot hold a sufficient amount of the coating material, unevenness occurs to coating, and if the total sum is larger than 7.0 μm, coagulation of calcium carbonate particles is produced in the roller concave portions.

BRIEF DESCRIPTION OF DRAWINGS

[Fig. 1] Fig. 1 is a schematic view for explaining a mechanism of occurrence of delamination due to difference in orientation intensity ratio.
[Fig. 2] Fig. 2 is a schematic view for explaining a mechanism for adjusting the orientation intensity ratio.
[Fig. 3] Fig. 3 is a schematic view for explaining a roll coat method as a film deposition method of a resin coating layer.

DESCRIPTION OF EMBODIMENT

Hereinafter, an embodiment to which the present invention is applied will be described with reference to Fig. 3. After finishing is carried out for an internal surface of a semi-cylindrical member 14 that is obtained by working an aluminum bearing alloy, which is pressure-welded to a back metal, into a half shell shape, surface roughening treatment by blast is carried out, and thereafter, the semi-cylindrical member 14 is coated with a resin layer by a roll coat method, in a state in which the semi-cylindrical member 14 is fitted to an assembly housing 15. In coating according to the roll coat method, a coating material obtained by mixing preset materials (for example, a resin binder PAI, a solid lubricant, adjustment particles such as (calcium carbonate and the other additives, or PA or EP shown in Table 1) is prepared in advance, a coating material supplying part 10 containing the prepared coating material is brought into contact with a transfer roller 11, and the coating material is caused to adhere to the transfer roller 11 that is rotating. Furthermore, the transfer roller 11 and the print roller 12 are rotationally brought into contact with each other, and thereby the coating material on the transfer roller 11 is transferred onto the print roller 12. Next, coating of the resin layer is carried out by rotating the print roller 12 on which the coating material is transferred around a support portion 16 of a load adjustment arm 13 to transfer the coating material onto an inner surface of the semi-cylindrical member 14. At this time, with use of the print roller 12 with a roughness of 5.8 μm (Rp + Rv) is used, a pressing pressure is adjusted by the load adjustment arm 13, and an orientation intensity ratio is adjusted. After coating, the semi-cylindrical member 14 is dried at 100°C for approximately one minute, and by repeating the coating and drying, the thickness shown in the column of "FILM THICKNESS" of Table 1 is achieved. thereafter, burning is performed at 180 to 220°C for approximately one hour, and the sliding bearings of Examples 1 to 17 and Comparative Examples 1 to 15 shown in Table 1 are completed.
In the present embodiment, the orientation intensity ratio (%) is calculated by the following formula.

$$(\text{Formula}) \quad \Sigma I\,(0,\,0,\,L)/\Sigma I\,(H,\,K,\,L) \times 100$$

$\Sigma I\,(0, 0, L)$: Integrated values of the peak intensities of $(0, 0, 2)$, $(0, 0, 4)$, $(0, 0, 6)$, and $(0, 0, 8)$ planes.
$\Sigma I\,(H, K, L)$: Integrated values of the peak intensities of $(0, 0, 2)$, $(0, 0, 4)$, $(0, 0, 6)$, $(0, 0, 8)$, $(1, 0, 0)$, $(1, 0, 1)$, $(1, 0, 2)$, $(1, 0, 3)$, $(1, 0, 4)$, $(1, 0, 5)$, $(1, 1, 0)$ and $(1, 1, 6)$ planes.

[Table 1]

| | No. | PAI | PLATE SOLID LUBRICANT (vol%) | | ADDITIVE (vol%) | | PA, EP AMOUNTS (mass%) | | FILM THICKNESS (μm) | ORIENTATION INTENSITY RATIO OF SOLID LUBRICANT (0, 0, L) PLANE (%) | AVERAGE PARTICLE SIZE (μm) | DISTANCE BETWEEN GRAVITY CENTERS | | MAXIMUM SPECIFIC LOAD WITH NO SEIZURE (MPa) |
|---|---|---|---|---|---|---|---|---|---|---|---|---|---|---|
| | | | MoS₂ | h-BN | CaCO₃ | OTHERS | PA | EP | | | | α-1σ | α+1σ | |
| EXAMPLES | 1 | BALANCE | 50 | - | 5 | - | - | - | 8 | 84.2 | 1.25 | 7.2 | 14.9 | 45 |
| | 2 | BALANCE | - | 20 | 30 | - | 5 | - | 7 | 78.2 | 1.57 | 2.7 | 10.1 | 45 |
| | 3 | BALANCE | 40 | - | 15 | - | 6 | 4 | 6 | 83.1 | 1.25 | 5.2 | 13.4 | 55 |
| | 4 | BALANCE | 30 | - | 20 | - | 5 | - | 6 | 84.0 | 0.93 | 4.5 | 12.9 | 55 |
| | 5 | BALANCE | - | 40 | 15 | - | - | - | 7 | 84.9 | 1.25 | 4.9 | 13.8 | 45 |
| | 6 | BALANCE | 25 | - | - | CaF₂ 10 | 12 | 3 | 6 | 78.1 | 0.72 | 6.2 | 13.7 | 50 |
| | 7 | BALANCE | 40 | - | 25 | - | - | - | 5 | 82.9 | 0.93 | 4.2 | 11.1 | 60 |
| | 8 | BALANCE | - | 40 | 15 | - | 15 | 5 | 10 | 83.4 | 1.25 | 5 | 12.8 | 40 |
| | 9 | BALANCE | 50 | - | 30 | - | - | - | 4 | 84.7 | 1.57 | 3.2 | 9.3 | 45 |
| | 10 | BALANCE | 20 | - | 5 | - | - | - | 9 | 76.3 | 0.72 | 6.9 | 14.3 | 40 |
| | 11 | BALANCE | - | 30 | 15 | - | 25 | 5 | 3 | 75.2 | 0.93 | 5.4 | 12.6 | 55 |
| | 12 | BALANCE | 40 | - | 25 | Cu₃AsS₄ 1 | 25 | 10 | 6 | 80.3 | 0.93 | 4.1 | 11.8 | 50 |
| | 13 | BALANCE | - | 30 | 10 | - | 6 | 4 | 4 | 79.5 | 0.72 | 6.5 | 12.9 | 55 |
| | 14 | BALANCE | 40 | - | 15 | - | - | - | 2 | 81.4 | 1.25 | 4.9 | 12.4 | 40 |
| | 15 | BALANCE | 30 | - | 20 | - | - | 5 | 5 | 82.3 | 1.57 | 5.1 | 13.8 | 60 |
| | 16 | BALANCE | - | 50 | 15 | - | - | - | 8 | 82.8 | 0.93 | 3.9 | 10.5 | 45 |
| | 17 | BALANCE | 45 | - | 15 | - | 7 | 3 | 6 | 83.6 | 1.25 | 4.2 | 11.8 | 55 |
| COMPARATIVE EXAMPLES | 1 | BALANCE | 40 | - | 15 | - | 6 | 4 | 6 | 71.3 | 1.25 | 5.3 | 12.8 | 25 |
| | 2 | BALANCE | 40 | - | - | - | - | - | 6 | 88.2 | - | - | - | 20 |
| | 3 | BALANCE | 40 | - | 15 | - | 3 | 7 | 6 | 90.7 | 1.25 | 5.2 | 11.9 | 25 |
| | 4 | BALANCE | - | 30 | 20 | - | 5 | - | 6 | 85.9 | 0.93 | 4.7 | 12.7 | 30 |
| | 5 | BALANCE | - | 40 | - | CaSO₄ 20 | - | - | 4 | 85.8 | 1.02 | 5.2 | 13.1 | 30 |
| | 6 | BALANCE | 40 | - | - | Al₂O₃ 20 | - | - | 8 | 81.8 | 1.32 | 5.1 | 11.6 | 15 |
| | 7 | BALANCE | 55 | - | 20 | - | - | - | 4 | 78.2 | 0.93 | 4.9 | 13.2 | 25 |
| | 8 | BALANCE | 40 | - | 15 | - | 5 | 5 | 6 | 81.2 | 1.67 | 2.9 | 10.2 | 25 |
| | 9 | BALANCE | - | 20 | 35 | - | - | - | 8 | 83.2 | 0.72 | 2.8 | 5.4 | 15 |
| | 10 | BALANCE | 15 | - | 15 | - | 16 | 4 | 10 | 81.6 | 1.25 | 4.8 | 12.2 | 15 |
| | 11 | BALANCE | - | 40 | 15 | - | 7 | 3 | 6 | 85.9 | 0.62 | 5.2 | 11.9 | 25 |
| | 12 | BALANCE | - | 20 | 4 | - | - | - | 9 | 85.2 | 0.72 | 10.2 | 15.2 | 20 |
| | 13 | BALANCE | 30 | - | 40 | - | 9 | 6 | 1.5 | 84.5 | 1.25 | 6.2 | 13.8 | 20 |
| | 14 | BALANCE | 40 | - | - | - | - | - | 5 | 83.1 | - | - | - | 20 |
| | 15 | BALANCE | - | 30 | 20 | - | 5 | - | 12 | 82.0 | 0.93 | 6.1 | 14.1 | 15 |

For the sliding bearings of Examples 1 to 17 and Comparative Examples 1 to 15 that were produced as described above, the test (seizure test) with the operation under the engine environment of the starting/stopping mode being assumed was carried out, which differs from the test with use in the conventional engine with high circumferential speed/high specific load being assumed. Note that the test conditions of the seizure test are as shown in Table 2.

[Table 2]

| ITEM | CONDITION | UNIT |
|---|---|---|
| ENGINE SPEED | 3,600 (START/STOP) | rpm |
| CIRCUMFERENTIAL SPEED | 10 (START/STOP) | m/sec |
| LUBRICATING OIL | VG22 | - |
| OIL SUPPLY AMOUNT | 150 | ml/min |
| SHAFT MATERIAL | S55C | - |

Hereinafter, the test result will be described with reference to Table 1. Examples 1 to 17 in Table 1 are included in the present invention, and Comparative Examples 1 to 15 are not included in the present invention. That is, Examples 1 to 17 were produced respectively so as to obtain the range of 20 to 50 vol% of plate solid lubricant, 5 to 30 vol% of the adjustment particles with a Vickers hardness of 100 to 300, the average particle size of the adjustment particles of 0.7 to 1.6 $\mu$m, the orientation intensity ratio of the (0, 0, L) plane of the solid lubricant of 75 to 85%, and the film thickness of 2 to 10 $\mu$m. In Examples 1, 3, 4, 6, 7, 9, 10, 12, 14, 15 and 17, molybdenum disulfide ($MoS_2$) is used as the plate solid lubricants, and in Examples 2, 5, 8, 11, 13 and 16 other than the above, boron nitride (h-BN) is used as the plate solid lubricants. In Example 6, calcium fluoride is added as the adjustment particles. In Example 12, calcium carbonate and enargite are added as the adjustment particles. In the other examples, calcium carbonate is added as the adjustment particles. Furthermore, Examples 1 to 17 except for Example 12 are produced so that any one or both of PA and EP is or are contained in the resin binder with PAI used as a main component, in the range of 0 to 30 mass% in total with respect to PAI. Furthermore, Examples 1 to 17 except for Example 2 are produced so that the average value $\alpha$ of the inter-particle distances of the adjustment particles is in the range of 3 $\mu$m $\leq \alpha$- 1$\sigma$ and $\alpha$ + 1$\sigma \leq$ 15 $\mu$m.

In each of Examples 1, 9 and 16 that contain the plate solid lubricant ($MoS_2$ or h-BN) to the upper limit, the maximum specific load is 45 MPa, which is the value larger than the maximum specific load of 40 MPa (hereinafter, this will be called "allowable specific load") that is measured as the maximum specific load at which a seizure phenomenon does not occur in the actual engine test that frequently repeats starting and stopping. Meanwhile, in Examples 2 and 10 that include the plate solid lubricants up to the lower limit, the maximum specific loads are respectively 45 and 40 MPa that are the values as large as and larger than the allowable specific load. From the above, it is understandable that by adding the plate solid lubricant in the range of 20 to 50 vol%, the sliding characteristics of the resin layer can be improved, and as a result, seizure does not occur. In the examples other than those described above, the maximum specific loads are 40 MPa or more, and in Example 5 where the orientation intensity ratio is the upper limit, Example 8 where the film thickness is the upper limit, and Example 14 where the film thickness is the lower limit, the specific loads have the values close to the allowable specific load. Furthermore, in Examples 3, 4, 6, 7, 11, 12, 13, 15 and 17 in the preferable range with 25 to 45 vol% of the plate solid lubricant, 10 to 25 vol% of calcium carbonate particles that are the adjustment particles, and the film thickness of 3 to 8 $\mu$m, the maximum specific loads are large values of 50 MPa or more.

Meanwhile, Comparative Examples 1 to 15 are not included in the present invention. Comparative Example 1 is substantially the same as Example 3 in composition, but has a low orientation intensity ratio that is 71.3%. Therefore, it is conceivable that the sliding characteristics of the resin coating layer are worsened, the shearing force exerted on the resin coating layer becomes high to cause delamination, and therefore, the maximum specific load becomes 25 MPa that is lower than the allowable specific load. It is conceivable that since Comparative Examples 2 and 14 (corresponding to the sliding member of Patent Literature 1) do not contain adjustment particles, the indentations to the resin coating layer by a shaft become large, the shearing force exerted to the resin coating layer becomes high to cause delamination, and therefore, the maximum specific load becomes 20 MPa that is lower than the allowable specific load. Furthermore, it is conceivable that since in Comparative Example 3, the orientation intensity ratio is as high as 90.7% contrary to Comparative Example 1, propagation of cracks in the resin coating layer does not stop to generate large delamination, and therefore, the maximum specific load becomes 25 MPa that is lower than the allowable specific load. It is conceivable that in Comparative Example 4, the composition thereof is substantially the same, though the kind of plate solid lubricant is different. as compared with Example 4, but the orientation intensity ratio is 85.9% that slightly exceeds the upper limit value, and therefore, the maximum specific load becomes 30 MPa that is lower than the allowable specific load for the reason similar to Comparative Example 3.

Comparative Examples 5 and 6 have the compositions close to that of Example 7, but in place of the particles of calcium carbonate and calcium fluoride that are adjustment particles, Example 5 contains 20 vol% of particles of calcium sulfate ($CaSO_4$), and Comparative Example 6 contains 20 vol% of particles of alumina ($Al_2O_3$), respectively. In these cases, the maximum specific loads are respectively 30 MPa and 15 MPa that are lower than the allowable specific load. The reason is conceivable as follows. Calcium sulfate and alumina of similar particle sizes to that of the adjustment particles are used, but it is conceivable that since calcium sulfate is lower in hardness as compared with the adjustment particles, calcium sulfate is easily broken by the pressing specific load at the time of coating, as a result, has a small effect of inclining the plate solid lubricant (solid lubricant orientation adjustment effect), and therefore, delaminates with the low specific load to cause seizure. Meanwhile, alumina is considered to cause seizure with a low specific load on the ground that sliding characteristics are reduced, and aggressiveness to the shaft becomes high since alumina has high hardness though solid lubricant orientation adjustment effect is found. That is, it can be said that the sliding bearing that exhibits a solid lubricant orientation adjuster effect, and exhibits high seizure performance as the bearing under the engine environment of a starting/stopping mode is the sliding bearing to which adjustment particles, in particular, particles of calcium carbonate are added.

It is conceivable that in the sliding bearings in which the contents of the plate solid lubricants exceed the upper limit value and the lower limit value respectively as Comparative Example 7 (substantially the same as Example 7 in composition) and Comparative Example 10 (substantially the same as Example 8 in composition), the maximum specific loads become 25 MPa and 15 MPa that are lower than the allowable specific load respectively due to delamination based on worsening of the sliding characteristics of the resin layers and reduction of the coating film strength. It is conceivable that in the sliding bearings in which the average particle sizes of calcium carbonate particles exceed the upper limit value and the lower limit value respectively like Comparative Examples 8 and 11 (substantially the same as Example 3 in composition), the maximum specific loads become 25 MPa that is lower than the allowable specific load respectively since roughness of the sliding surfaces, the effect of damming crack propagation and the solid lubricant orientation adjustment effect, are poor. It is conceivable that in the sliding bearings in which the contents of calcium carbonate particles exceed the upper limit value and the lower limit value respectively like Examples 9 and 12 (substantially the same as Example 10 in composition), the maximum specific loads become 15 MPa and 20 MPa that are lower than the allowable specific load respectively since the roughness of the sliding surface, the effect of damming crack propagation and the solid lubricant orientation adjustment effect are poor. Furthermore, in the sliding bearings in which the film thicknesses exceed the lower limit value and the upper limit value respectively like Comparative Example 13 (substantially the same as Example 3 in composition) and Comparative Example 15 (substantially the same as Example 4 in composition), the maximum specific loads become 20 MPa and 15 MPa respectively that are lower than the allowable specific load due to early metal contact even with slight delamination, and reduction in mechanical properties of the resin coating layer by worsening of the thermal conductivity.

As is obvious from what is described above, in the sliding bearing which is provided with the resin coating layer on the surface of the bearing alloy layer layered on a back metal layer, PAI that hardly degrades at high temperatures is used as the main component as the resin binder of the resin coating layer, a proper amount of adjustment particles of calcium carbonate or the like are included in the resin binder, and thereby the compressive strength of the resin coating layer is increased to prevent indentations of the resin, coating layer resulting from a shaft, while by including the plate solid lubricant in the resin binder, the sliding characteristics are improved, and delamination due to cracks of the resin coating layer is prevented by the damming effect of the adjustment particles and the solid lubricant orientation adjustment effect, whereby the sliding bearing that has excellent anti-seizure property even in an engine that frequently repeats starting and stopping can be provided.

REFERENCE SIGNS LIST

1    BEARING ALLOY LAYER
2    RESIN COATING LAYER
3    ADJUSTMENT PARTICLES (CALCIUM CARBONATE PARTICLES)
4    PLATE SOLID LUBRICANT
10   COATING MATERIAL SUPPLY PART
11   TRANSFER ROLLER
12   PRINT ROLLER
13   LOAD ADJUSTMENT ARM
14   SEMI-CYLINDRICAL MEMBER
15   HOUSING

## Claims

1. A sliding bearing comprising a back metal layer, a bearing alloy layer layered on the back metal layer, and a resin coating layer having a sliding surface that is provided on a surface of the bearing alloy layer, **characterized in that**
the resin coating layer is formed as a layer having a thickness of 2 to 10 $\mu$m and including 20 to 50 vol% of a plate solid lubricant and 5 to 30 vol% of adjustment particles in a resin binder of which a main component is a polyamide imide resin (PAI), the adjustment particles having an average particle size of 0.7 to 1.6 $\mu$m and a Vickers hardness of 100 to 300, and
the plate solid lubricant is disposed in a state where an orientation intensity ratio of a (0, 0, L) plane of the plate solid lubricant to the sliding surface is 75% or more and 85% or less;
wherein, as the method for measuring the average particle size of the adjustment particles, the composition image of the resin coating layer is photographed with use of an electron microscope with a 5000-fold magnification, and from the obtained composition image, the average particle size is measured by using an ordinary image analysis method.

2. The sliding bearing according to claim 1, **characterized in that**
the resin binder includes 30 mass% or less of a polyamide resin (PA) and an epoxy resin (EP) in total, and
the adjustment particles are made of calcium carbonate.

3. The sliding bearing according to claim 1 or claim 2, **characterized in that** the adjustment particles are distributed so that a distance between gravity centers of the adjustment particles in a film thickness section of the resin coating layer satisfies

$$3 \ \mu m \leq \alpha - 1\sigma, \text{ and } \alpha + 1\sigma \leq 15 \ \mu m,$$

where $\alpha$ and $\sigma$ are an average value and a standard deviation of the distances between the gravity centers of the particles, respectively.

## Patentansprüche

1. Gleitlager, umfassend eine Metallstützschicht , eine La-gerlegierungsschicht, die auf der Metallstützschicht aufgebracht ist und eine Harzbeschichtungsschicht mit einer Gleitoberfläche, die auf einer Oberfläche der Lagerlegierungsschicht aufgebracht ist, **dadurch gekennzeichnet, dass**
die Harzbeschichtungsschicht gebildet ist als eine Schicht mit einer Dicke von 2 bis 10 $\mu$m und 20 bis 50 Volumenprozent eines plattenförmigen festen Schmierstoffs und 5 bis 30 Volumenprozent von Anpassungsteilchen in einem Harzbindemittel, wovon ein Hauptbestandteil ein Polyamidimidharz (PAI) ist, enthält, wobei die Anpassungsteilchen eine durchschnittliche Teilchengröße von 0,7 bis 1,6 $\mu$m und eine Vickers-Härte von 100 bis 300 haben, und
der plattenförmige feste Schmierstoff eingebracht ist in einem Zustand, in dem'das Orientierungsintensitätsverhältnis einer (0, 0, L)-Ebene des plattenförmigen festen Schmierstoffs zu der Gleitoberfläche 75% oder mehr und 85% oder weniger ist;
wobei, als Verfahren zur Messung der durchschnittlichen Teilchengröße der Anpassungsteilchen, das Zusammensetzungsbild der Harzbeschichtungsschicht fotografiert wird unter Verwendung eines Elektronenmikroskops mit einer 5.000-fachen Vergrößerung und aus dem erhaltenen Zusammensetzungsbild die durchschnittliche Teilchengröße gemessen wird unter Verwendung eines herkömmlichen Bildanalyseverfahrens.

2. Gleitlager nach Anspruch 1, dadurch gekennzeichn e t , dass
das Harzbindemittel insgesamt 30 Massenprozent oder weniger von einem Polyamidharz (PA) und einem Epoxyharz (EP) enthält, und
die Anpassungsteilchen aus Calciumcarbonat hergestellt sind.

3. Gleitlager nach einem der Ansprüche 1 oder 2, **dadurch gekennzeichnet, dass**
die Anpassungsteilchen so verteilt sind, dass ein Abstand zwischen Schwerpunkten der Anpassungsteilchen in einem Filmdickenabschnitt der Harzbeschichtungsschicht der Beziehung

$$3 \ \mu m \leq \alpha - 1\sigma \ \text{und} \ \alpha + 1\sigma \leq 15 \ \mu m$$

genügt, wobei $\alpha$ und $\sigma$ ein Durchschnittswert bzw. eine Standardabweichung der Abstände zwischen den Schwerpunkten der Teilchen sind.

**Revendications**

1. Palier lisse comprenant une couche de métal postérieure, une couche d'alliage de palier disposée en couche sur la couche de métal postérieure, et une couche de revêtement de résine ayant une surface glissante qui est ménagée sur une surface de la couche d'alliage de palier, **caractérisé en ce que** la couche de revêtement de résine est formée comme une couche ayant une épaisseur de 2 à 10 $\mu$m et incluant 20 à 50 % en volume d'un lubrifiant solide en plaque et 5 à 30 % en volume de particules d'ajustement dans un liant de résine dont un composant principal est une résine de polyamide imide (PAI), les particules d'ajustement ayant une taille moyenne de particules de 0,7 à 1,6 $\mu$m et une dureté Vickers de 100 à 300, et
le lubrifiant solide en plaque est disposé dans un état où un rapport d'intensité d'orientation entre un plan (0,0,L) du lubrifiant solide en plaque et la surface glissante est de 75 % ou plus et de 85 % ou moins ;
dans lequel, comme la méthode de mesure de la taille moyenne de particule des particules d'ajustement, l'image de composition de la couche de revêtement de résine est photographiée à l'aide d'un microscope électronique avec un grossissement de 5 000 fois, et à partir de l'image de composition obtenue, la taille moyenne de particules est mesurée par l'utilisation d'une méthode d'analyse d'image ordinaire.

2. Palier lisse selon la revendication 1, **caractérisé en ce que**
le liant de résine inclut 30 % en masse ou moins d'une résine de polyamide (PA) et d'une résine époxy (EP) au total, et les particules d'ajustement sont faites de carbonate de calcium.

3. Palier lisse selon la revendication 1 ou la revendication 2, **caractérisé en ce que** les particules d'ajustement sont réparties de sorte qu'une distance entre des centres de gravité des particules d'ajustement dans une section d'épaisseur de film de la couche de revêtement de résine satisfait

$$3 \ \mu m \leq \alpha - 1\sigma, \ \text{et} \ \alpha + 1\sigma \leq 15 \ \mu m,$$

où $\alpha$ et $\sigma$ sont une valeur moyenne et un écart-type des distances entre les centres de gravité des particules, respectivement.

# FIG.1

(a)

(b)

(c)

(d)

# FIG.2

# FIG.3

(a)                                          (b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008095725 A
- JP 2010249313 A
- JP 2010216639 A
- JP 2000505527 A